# EUROPEAN PATENT SPECIFICATION

(11) **EP 2 526 305 B1**
(45) Date of publication and mention of the grant of the patent: **29.04.2015**
(21) Application number: 11711132.8
(22) Date of filing: 19.01.2011
(51) Int. Cl.: F15B 11/00, F15B 13/042, F15B 13/04

(54) **PROPORTIONAL VALVE ASSEMBLY**
PROPORTIONALE VENTILANORDNUNG
ENSEMBLE VALVE PROPORTIONNELLE

(30) Priority: 20.01.2010 US 690724
(43) Date of publication of application: 28.11.2012
(73) Proprietor: Eaton Corporation, Cleveland, OH 44114-2584 (US)
(72) Inventor: GEHLHOFF, Wade, L., Shakopee, MN 55379 (US); SCHOTTLER, Chris, M., Chanhassen, MN 55317 (US)
(74) Representative: Schwan Schorer & Partner mbB
(86) International application number: PCT/IB2011/000072
(87) International publication number: WO 2011/089503

(56) References cited:
- DE-A1- 19 728 092
- JP-A- 60 196 476
- US-A- 5 331 883
- US-A1- 2005 242 310

## Description

### BACKGROUND

Valve assemblies are used in various applications including off-highway agriculture and construction equipment (e.g., wheel loaders, skid steers, combines, etc.). In some applications, valve assemblies are used to control the amount of fluid provided to implements such as buckets or booms. It is desired to have a valve assembly that is capable of some degree of load holding such that the implements can hold a load (e.g., extended boom, load in a bucket, etc.) for an extended period of time. In addition, it is desired to have a valve assembly that includes an anti-cavitation feature.

A valve assembly as defined in the pre-characterizing portion of claim 1 is known from JP-60 196476 A.

### SUMMARY

The present invention is a valve assembly as it is defined in claim 1. The valve assembly includes a valve housing. The valve housing defines a first service passage, a first valve bore, a first fluid passage, a second valve bore and a second fluid passage. The first valve bore is in fluid communication with the first service passage. The first valve bore has an inlet portion in fluid communication with an inlet passage of the valve housing, a first service portion in fluid communication with the first service passage, and a first load holding portion. The first valve bore has a first valve seat that is disposed between the inlet portion and the service portion. The first fluid passage is in selective fluid communication with the first load holding portion of the first valve bore and the first service passage. The second valve bore is in fluid communication with the first service passage. The second valve bore has a return portion in fluid communication with a return passage of the valve housing, a second service portion in fluid communication with the first service passage, and a second load holding portion. The second valve bore has a second valve seat that is disposed between the return passage and the first service passage. The second fluid passage is in selective communication with the second load holding portion of the second valve bore and the return passage. An inlet valve is disposed in the first valve bore. The inlet valve is moveable between a seated position and an unseated position. A return valve assembly is disposed in the second valve bore. The return valve is moveable between a seated position and an unseated position. In accordance with the present invention, a one-way valve is disposed in the second fluid passage. The one-way valve allows fluid to flow only in a direction from the second load holding portion to the return passage.

Further embodiments of the invention are defined in the dependent claims.

A variety of additional aspects will be set forth in the description that follows. These aspects can relate to individual features and to combinations of features. It is to be understood that both the foregoing general description and the following detailed description are exemplary and explanatory only and are not restrictive of the broad concepts upon which the embodiments disclosed herein are based.

### DRAWINGS

FIG. 1 is a schematic representation of a fluid system having exemplary features of aspects in accordance with the principles of the present disclosure.
FIG. 2 is a schematic representation of a valve assembly suitable for use with the fluid system of FIG. 1.
FIG. 3 is a schematic representation of an inlet valve assembly suitable for use in the valve assembly of FIG. 2.
FIG. 4 is a schematic representation of a return valve assembly suitable for use in the valve assembly of FIG. 2.
FIG. 5 is a schematic representation of the valve assembly with a middle stage valve assembly in a first position and the inlet valve assembly in an unseated position.
FIG. 6 is a schematic representation of the valve assembly with the middle stage valve assembly in a second position and the return valve assembly in an unseated position.
FIG. 7 is a schematic representation of the valve assembly with the middle stage valve assembly in the second position and return valve assembly in the unseated position.

### DETAILED DESCRIPTION

Reference will now be made in detail to the exemplary aspects of the present disclosure that are illustrated in the accompanying drawings. Wherever possible, the same reference numbers will be used throughout the drawings to refer to the same or like structure.

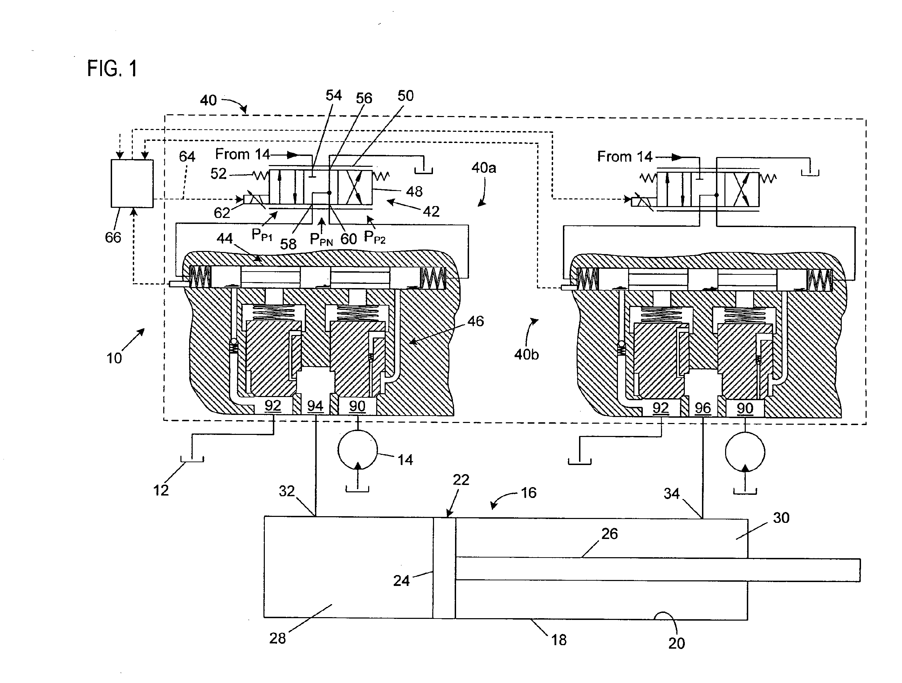

Referring now to FIG. 1, a fluid system, generally designated 10, is shown. The fluid system 10 includes a fluid reservoir 12, a fluid pump 14, and a fluid actuator 16. While the fluid actuator 16 is shown in FIG. 1 as being a linear actuator (e.g., a cylinder, etc.), it will be understood that the actuator 16 could alternatively be a rotary actuator (e.g., a fluid motor, etc.).

The fluid actuator 16 includes a housing 18 defining a bore 20. A piston assembly 22 is disposed in the bore 20. The piston assembly 22 includes a piston 24 and a rod 26. The piston 24 of the piston assembly 22 separates the bore 20 into a first chamber 28 and a second chamber 30. In the depicted embodiment, the fluid actuator 16 is a double acting cylinder. The rod 26 of the piston assembly 22 extends from the housing 18 of the fluid actuator 16 when fluid from the fluid pump 14 is directed to the first chamber 28 and fluid in the second chamber 30 is vented to the fluid reservoir 12. The rod 26 retracts when fluid from the fluid pump 14 is directed to the second chamber 30 and fluid in the first chamber 28 is vented to the fluid reservoir 12.

The fluid actuator 16 further includes a first port 32 and a second port 34. The first port 32 is in fluid communication with the first chamber 28 while the second port 34 is in fluid communication with the second chamber 30.

The fluid system 10 further includes a valve assembly 40, is shown. In the depicted embodiment, the valve assembly 40 includes a first valve assembly 40a and a second valve assembly 40b. The first valve assembly 40a selectively provides fluid communication between the fluid pump 14 and/or fluid reservoir 12 and the first chamber 28 of the fluid actuator 16 while the second valve assembly 40b selectively provides fluid communication between the fluid pump 14 and/or the fluid reservoir 12 and the second chamber 30 of the fluid actuator 16. As the first and second valve assemblies 40a, 40b are substantially similar in structure, only the first valve assembly 40a will be described for ease of description purposes.

In the depicted embodiment, each of the first and second valve assemblies 40a, 40b includes three stages: a pilot stage valve assembly 42, a middle stage valve assembly 44 and a main stage valve assembly 46.

The pilot stage valve assembly 42 is a proportional valve that includes a pilot stage spool valve 48 and a housing 50. The pilot stage spool valve 48 is disposed in a bore of the housing 50 such that the pilot stage spool valve 48 is axially slidable in the bore of the housing 50.

The pilot stage valve assembly 42 further includes a plurality of centering springs 52. The plurality of centering springs 52 is adapted to center the pilot stage spool valve 48 in the bore of the housing 50.

In the depicted embodiment, the pilot stage valve assembly 42 is a four-way valve. The pilot stage valve assembly 42 includes a fluid inlet port 54, a fluid return port 56, a first control port 58 and a second control port 60. In the depicted embodiment, the pilot stage valve assembly 42 is a three-position valve. The pilot stage valve assembly 42 includes a neutral position P_{PN}, a first position P_{P1} and a second position P_{P2}.

In the neutral position P_{PN}, the first and second control ports 58, 60 are in fluid communication with the fluid return port 56. In the first position P_{P1}, the first control port 58 is in fluid communication with the fluid inlet port 54 while the second control port 60 is in fluid communication with the fluid return port 56. In the second position P_{P2}, the first control port 58 is in fluid communication with the fluid return port 56 while the second control port 60 is in fluid communication with the fluid inlet port 54.

As a proportional valve, the axial position of the pilot stage spool valve 48 in the bore of the housing 50 controls the amount of fluid that passes through the pilot stage valve assembly 42. The pilot stage valve assembly 42 includes an electronic actuator 62 that is adapted to axially move the pilot stage spool valve 48 in the bore of the housing 50 between the neutral position P_{PN} and the first and second positions P_{P1}, P_{P2}. In one aspect of the present disclosure, the electronic actuator 62 is a voice coil.

The electronic actuator 62 is actuated in response to an electronic signal 64 (shown as a dashed lined in FIG. 1) received from a microprocessor 66. In one aspect of the present disclosure, the microprocessor 66 provides the electronic signal 64 in response to various input signals.

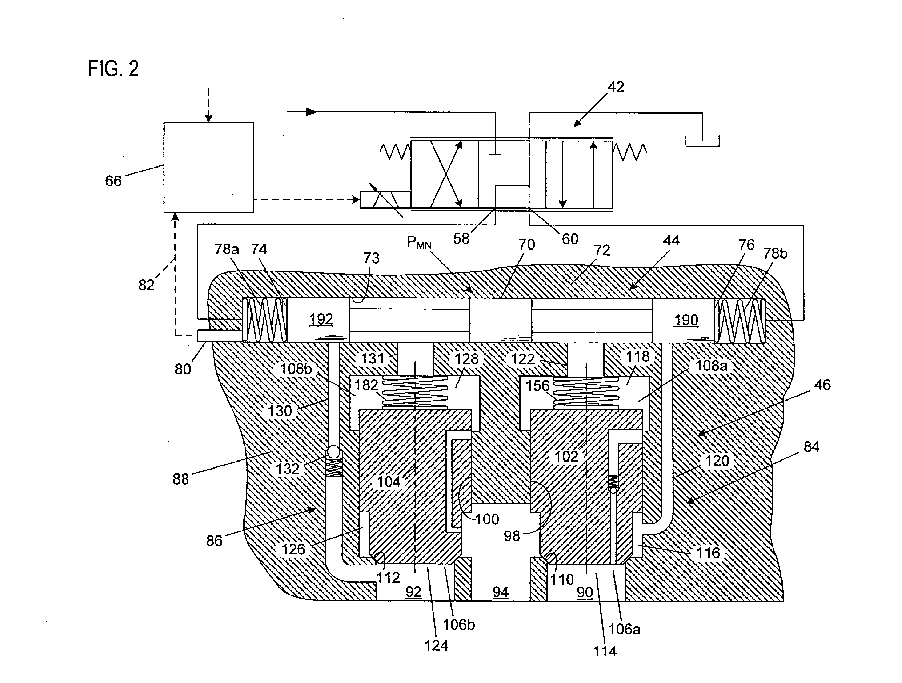

Referring now to FIGS. 1 and 2, the first and second control ports 58, 60 of the pilot stage valve assembly 42 are in fluid communication with the middle stage valve assembly 44. In one aspect of the present disclosure, the middle stage valve assembly 44 is a three-position, four-way proportional valve. In another aspect of the present disclosure, the middle stage valve assembly 44 is a two-position, two-way proportional valve.

The middle stage valve assembly 44 includes a middle stage spool valve 70 disposed in a housing 72. The middle stage spool valve 70 is disposed in a bore 73 of the housing 72 such that the middle stage spool valve 70 is axially slidable in the bore 73 of the housing 72.

The middle stage spool valve 70 includes a first axial end 74 and an oppositely disposed second axial end 76. A first spring 78a acts on the first axial end 74 of the middle stage spool valve 70 while a second spring 78b acts on the second axial end 76. The first and second springs 78a, 78b are adapted to center the middle stage spool valve 70 in the bore 73 of the housing 72.

The axial position of the middle stage spool valve 70 in the bore 73 of the housing is controlled by fluid pressure acting on one of the first and second axial ends 74, 76. In one aspect of the present disclosure, the first control port 58 of the pilot stage valve assembly 42 is in fluid communication with the first axial end 74 of the middle stage spool valve 70 while the second control port 60 of the pilot stage valve assembly 42 is in fluid communication with the second axial end 76.

The middle stage valve assembly 44 further includes a position sensor 80. In one aspect of the present disclosure, the position sensor 80 is a linear variable displacement transducer (LVDT). The position sensor 80 senses the position of the middle stage spool valve 70 in the bore 73 of the housing 72. The position sensor 80 sends a signal 82 to the microprocessor 66, which uses the positional data from the position sensor 80 to actuate the electronic actuator 62 of the pilot stage valve assembly 42. The positions of the middle stage valve assembly 44 will be described in greater detail subsequently.

The middle stage valve assembly 44 is in fluid communication with the main stage valve assembly 46. Each of the main stage valve assemblies 46 of the first and second valve assemblies 40a, 40b includes an inlet valve 84 and a return valve 86. In the depicted embodiment, the inlet valve 84 is in fluid communication with the fluid pump 14 while the return valve 86 is in fluid communication with the fluid reservoir 12.

Each of the main stage valve assemblies 46 of the first and second valve assemblies 40a, 40b is disposed in the valve housing 88. In the depicted embodiment, the valve housing 88 is the same structure as the housing 72 of the middle stage valve assembly 44. In another embodiment, the valve housing 88 is a different structure from the housing 72 of the middle stage valve assembly 44.

The valve housing 88 defines a plurality of fluid passages. In the depicted embodiment, the valve housing 88 defines an inlet passage 90, a return passage 92, a first service passage 94 and a second service passage 96. The inlet passage 90 is in fluid communication with the fluid pump 14 while the return passage 92 is in fluid communication with the fluid reservoir 12. The first and second service passages 94, 96 are in fluid communication with the fluid actuator 16. In the depicted embodiment, the first service passage 94 is in fluid communication with the first port 32 of the fluid actuator 16 while the second service passage 96 is in fluid communication with the second port 34 of the fluid actuator 16. In the depicted embodiment, the main stage valve assembly 46 of the first valve assembly 40a provides selective fluid communication between the fluid pump 14 and/or the fluid reservoir 12 and the first service passage 94 while the main stage valve assembly 46 of the second valve assembly 40b provides selective fluid communication between the fluid pump 14 and/or the fluid reservoir 12 and the second service passage 96.

As previously provided, the first and second valve assemblies 40a, 40b are substantially similar in the depicted embodiment. As the first and second valve assemblies 40a, 40b are substantially similar, only the features of the valve housing 88 that are associated with the first valve assembly 40a will be described for ease of description purposes. It will be understood that the valve housing 88 includes similar features associate with the second valve assembly 40b.

Referring now to FIG. 2, the valve housing 88 defines a first valve bore 98 and a second valve bore 100. The first valve bore 98 includes a first longitudinal axis 102 and is adapted to receive the inlet valve 84 of the first valve assembly 40a while the second valve bore 100 includes a second longitudinal axis 104 and is adapted to receive the return valve 86 of the first valve assembly 40a.

Each of the first and second valve bores 98, 100 includes a first axial end 106a, 106b and an oppositely disposed second axial end 108a, 108b. The first axial end 106a of the first valve bore 98 includes a first valve seat 110 while the first axial end 106b of the second valve bore 100 includes a second valve seat 112. The first and second valve seats 110, 112 are adapted for selective sealing engagement with the inlet and return valves 84, 86, respectively. Each of the first and second valve seats 110, 112 of the first and second valve bores 98, 100 is tapered so that each of the first and second valve seats 110, 112 includes an inner diameter that decreases as the distance along the first and second longitudinal axes 102, 104 from the first and second valve seats 110, 112 to the second axial ends 108a, 108b increases. In the depicted embodiment, the first and second valve seats 110, 112 are generally frusto-conical in shape.

The first valve bore 98 includes an inlet portion 114, a first service portion 116 and a first load holding portion 118. The inlet portion 114 is disposed at the first axial end 106a of the first valve bore 98 and is in fluid communication with the inlet passage 90. The first service portion 116 is disposed between the first and second axial ends 106a, 108a of the first valve bore 98 and is in fluid communication with the first service passage 94. The first load holding portion 118 is disposed at the second axial end 108a of the first valve bore 98.

The valve housing 88 defines a first fluid passage 120 that is in fluid communication with the first load holding portion 118 of the first valve bore 98 and the first service portion 116 of the first valve bore 98. The first fluid passage 120 includes a first portion 122a that is in fluid communication with the first service portion 116 of the first valve bore 98 and the bore 73 of the middle stage valve assembly 44 and a second portion 122b that is in fluid communication with the first load holding portion 118 of the first valve bore 98 and the bore 73 of the middle stage valve assembly 44. Actuation of the middle stage spool valve 70 opens or blocks fluid communication between the first and second portions 122a, 122b of the first fluid passage 120.

The second valve bore 100 includes a return portion 124, a second service portion 126 and a second load holding portion 128. The return portion 124 is disposed at the first axial end 106b of the second valve bore 100 and is in fluid communication with the return passage 92. The second service portion 126 is disposed between the first and second axial ends 106b, 108b of the second valve bore 100 and is in fluid communication with the first service passage 94. The second load holding portion 128 is disposed at the second axial end 108b of the second valve bore 100.

The valve housing 88 defines a second fluid passage 130 that is in fluid communication with the return portion 124 of the second valve bore 100 and the second load holding portion 128 of the second valve bore 100. The second fluid passage 130 includes a first portion 131a that is in fluid communication with the return portion 124 of the second valve bore 100 and the bore 73 of the middle stage valve assembly 44 and a second portion 131b that is in fluid communication with the second load holding portion 128 of the second valve bore 100 and the bore 73 of the middle stage valve assembly 44. Actuation of the middle stage spool valve 70 opens or blocks fluid communication between the first and second portions 131a, 131b of the second fluid passage 130.

The second fluid passage 130 includes a one-way valve 132 disposed in the second fluid passage 130. In the depicted embodiment, the one-way valve 132 is a check ball. The one-way valve 132 allows fluid to flow in a direction from the second load holding portion 128 of the second valve bore 100 to the return passage 92 but prevents fluid from flowing in a direction from the return passage 92 to the second loading holding portion 128 of the second valve bore 100. As will be described in greater detail subsequently, the one-way valve 132 disposed in the second fluid passage 130 enables the return valve 86 to function as an anti-cavitation valve. Cavitation in the fluid system 10 occurs when the fluid actuator 16 requires more fluid than is being provided by the fluid pump 14. As will be described in greater detail subsequently, the one-way valve 132 enables the return valve 86 to provide fluid communication between the return passage 92 and the first service passage 94 so that fluid from the fluid reservoir 12 is communicated to the fluid actuator 16.

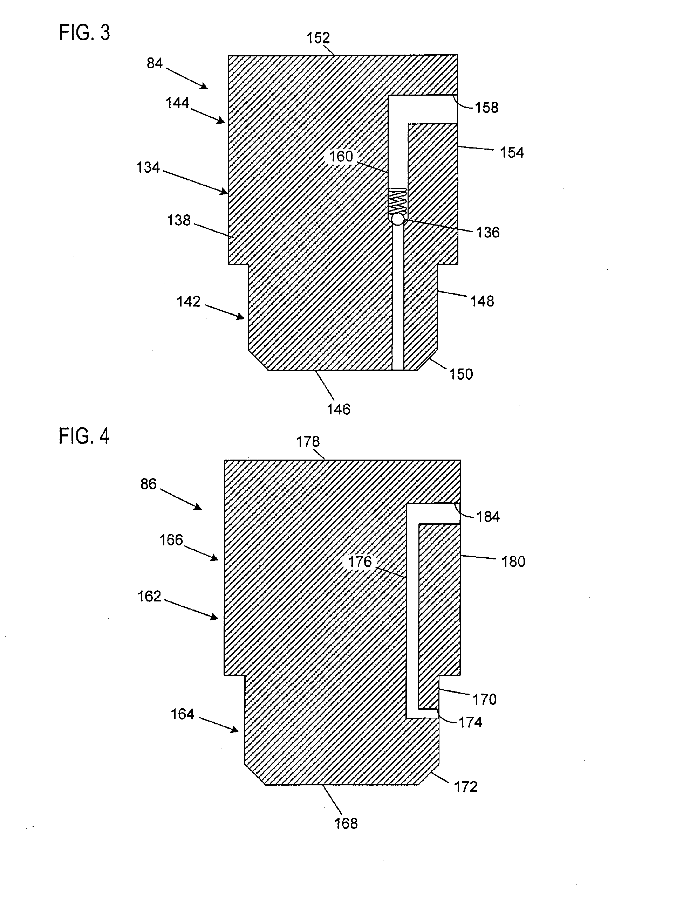

Referring now to FIGS. 2 and 3, the inlet valve 84 will be described. A poppet valve assembly that is suitable for use as the inlet valve 84 of the main stage valve assembly 46 has been described in U.S. Patent Application Serial No. 12/536,190. The inlet valve 84 includes a first poppet valve 134 and a check valve 136 disposed in the first poppet valve 134.

The first poppet valve 134 includes a body 138 having a first axial end portion 142 and an oppositely disposed second axial end portion 144. The first axial end portion 142 includes a first end surface 146 and a first circumferential surface 148. The first circumferential surface 148 is generally cylindrical in shape. In one aspect of the present disclosure, the first circumferential surface 148 includes a first tapered surface. The first tapered surface is adapted for selective sealing engagement with the first valve seat 110 of the first valve bore 98. The first tapered surface is disposed adjacent to the first end surface 146. The first tapered surface is generally frusto-conical in shape.

The second axial end portion 144 includes a second end surface 152 and a second circumferential surface 154. The second end surface 152 is oppositely disposed from the first end surface 146. The second end surface 152 is adapted to abut a first spring 156 disposed in the first load holding portion 118 of the first valve bore 98. The first spring 156 is adapted to bias the inlet valve 84 so that first tapered surface abuts the first valve seat 110.

The second circumferential surface 154 is generally cylindrical in shape. The second circumferential surface 154 defines a first metering slot 158 that extends into the body 138 in a radial direction.

The body 138 defines a first metering passage 160 that extends in an axial direction from the first end surface 146 to the first metering slot 158. The first metering passage 160 is adapted to provide fluid communication between the inlet passage 90 and the first load holding portion 118 of the first valve bore 98. The flow through the first metering passage 160 and the flow through the first fluid passage 120 of the valve housing 88 cooperatively determine the axial position of the inlet valve 84 in the first valve bore 98 and the amount of fluid that can pass from the inlet passage 90 to the first service passage 94 at a given pressure.

The check valve 136 is disposed in the first metering passage 160. The check valve 136 provides one-way fluid communication through the first metering passage 160 in a direction from inlet passage 90 to the first load holding portion 118 of the first valve bore 98. The check valve 136 prevents fluid from being communicated in a direction from the first load holding portion 118 of the first valve bore 98 to the inlet passage 90. The check valve 136 is adapted to prevent leakage through the first metering passage 160. Leakage flowing in the direction from the first load holding portion 118 of the first valve bore 98 to the inlet passage 90 can result in the inlet valve 84 being inadvertently unseated from the first valve seat 110.

Referring now to FIGS. 2 and 4, the return valve 86 will be described. The return valve 86 includes a second poppet valve 162. The second poppet valve 162 includes a first end portion 164 and an oppositely disposed second end portion 166.

The first end portion 164 includes a first end face 168 and a first circumferential surface 170. The first circumferential surface 170 is generally cylindrical in shape. In one aspect of the present disclosure, the first circumferential surface 170 includes a second tapered surface 172. The second tapered surface 172 is adapted for selective sealing engagement with the second valve seat 112 of the second valve bore 100. The second tapered surface 172 is disposed adjacent to the first end face 168. In the depicted embodiment, the second tapered surface 172 is generally frusto-conical in shape.

The first circumferential surface 170 defines a first orifice 174. The first orifice 174 is in fluid communication with a second metering passage 176 defined by the second poppet valve 162.

The second end portion 166 includes a second end face 178 and a second circumferential surface 180. The second end face 178 is oppositely disposed from the first end face 168. The second end face 178 is adapted to abut a second spring 182 disposed in the second load holding portion 128 of the second valve bore 100. The second spring 182 is adapted to bias the return valve 86 so that second tapered surface 172 abuts the second valve seat 112.

The second circumferential surface 180 is generally cylindrical in shape. The second circumferential surface 180 defines a second metering slot 184 that extends into the second poppet valve 162 in a radial direction. The second metering slot 184 is in fluid communication with the second metering passage 176.

The second metering passage 176 provides fluid communication between the second service portion 126 of the second valve bore 100 and the second load holding portion 128 of the second valve bore 100. The flow through the second metering passage 176 and the flow through the second fluid passage 130 of the valve housing 88 cooperatively determine the axial position of the return valve 86 in the second valve bore 100 and the amount of fluid that can pass from the first service passage 94 to the return passage 92 at a given pressure.

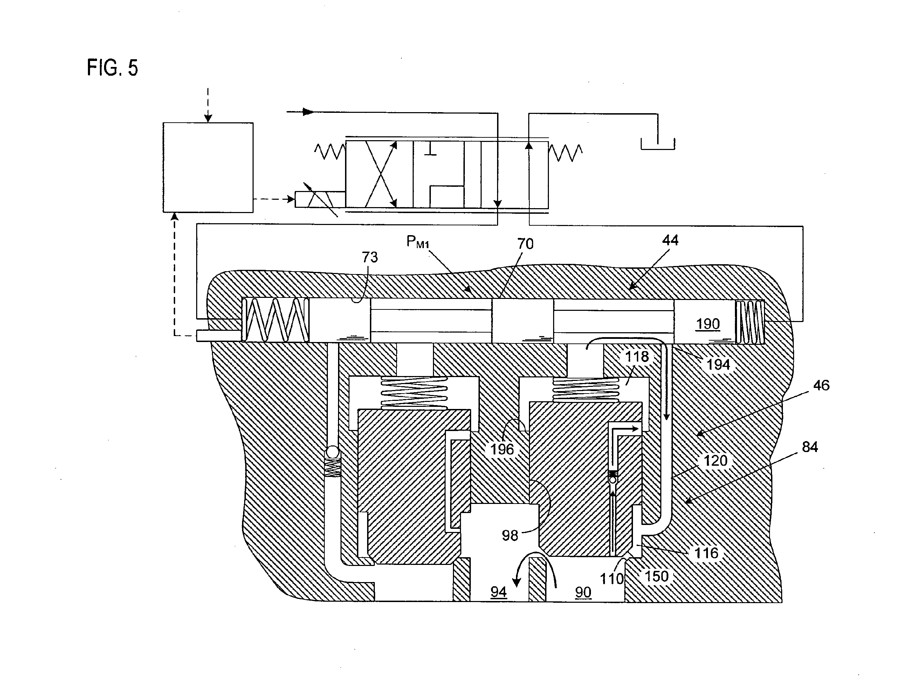

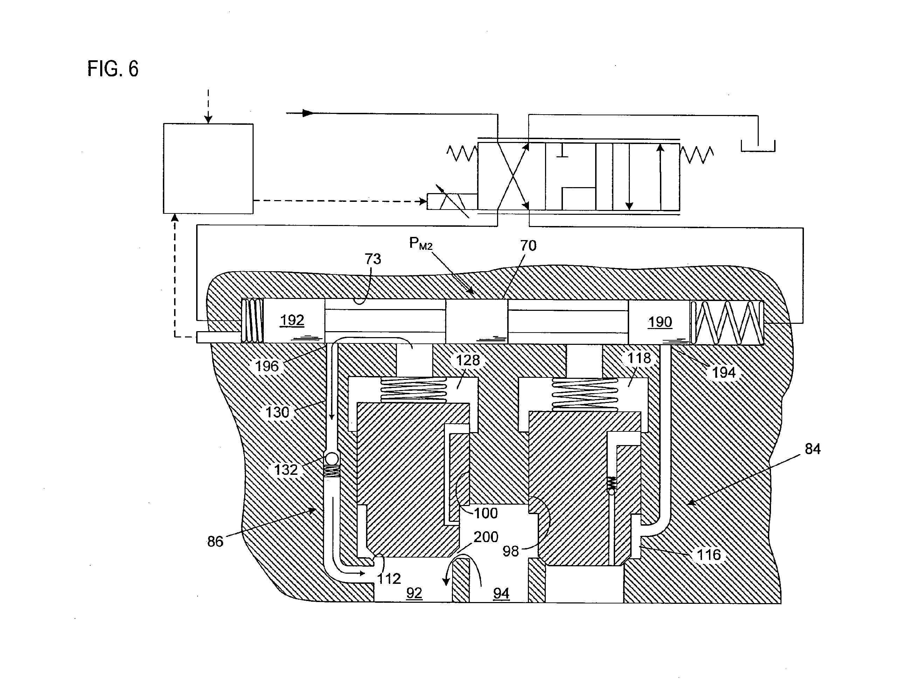

Referring now to FIGS. 2, 5 and 6, the actuation positions of the middle stage valve assembly 44 will be described. The middle stage valve assembly 44 includes a neutral position P_{MN} (shown in FIG. 2), a first position P_{M1} (shown in FIG. 5), and a second position P_{M2} (shown in FIG. 6).

The middle stage spool valve 70 includes a first land 190 and a second land 192. In the depicted embodiment, the first land 190 is oppositely disposed from the second land 192.

In the neutral position P_{MN}, the first land 190 of the middle stage spool valve 70 blocks fluid communication between the first load holding portion 118 of the first valve bore 98 and the first portion 122a of the first fluid passage 120 while the second land 192 blocks fluid communication between the second load holding portion 128 of the second valve bore 100 and the first portion 131a of the second fluid passage 130. With fluid communication between the first load holding portion 118 of the first valve bore 98 and the first portion 122a of the first fluid passage 120 blocked, the inlet valve 84 is hydraulically locked in a seated position in which the first tapered surface is seated against the first valve seat 110. With the first tapered surface seated against the first valve seat 110, the fluid communication between the inlet passage 90 and the first service passage 94 is blocked.

With fluid communication between the second load holding portion 128 of the second valve bore 100 and the first portion 131a of the second fluid passage 130 blocked, the return valve 86 is disposed in a seated position in which the second tapered surface 172 is seated against the second valve seat 112. With the second tapered surface 172 seated against the second valve seat 112, the fluid communication between the first service passage 94 and the return passage 92 is blocked.

Referring now to FIGS. 3 and 5, the middle stage valve assembly 44 is shown in the first position P_{M1} (shown in FIG. 5). In the first position P_{M1}, the first land 190 of the middle stage spool valve 70 at least partially uncovers a first opening 194 to the first portion 122a of the first fluid passage 120 at the bore 73. With the first opening 194 to the first portion 122a of the first fluid passage 120 at least partially uncovered, the first position P_{M1} of the middle stage valve assembly 44 is adapted to provide fluid communication between the first load holding portion 118 of the first valve bore 98 and the first portion 122a of the first fluid passage 120 in the first position P_{M1}. In this position, the inlet valve 84 can move axially in the first valve bore 98. If the flow through the first metering passage 160 is less than the flow through the first fluid passage 120, the first tapered surface of the first poppet valve 134 moves in a first axial direction away from the first valve seat 110 causing a clearance between the first tapered surface and the first valve seat 110. As this clearance increases, the amount of fluid communicated between the inlet passage 90 and the first service passage 94 increases. If the flow through the first metering passage 160 is equal to the flow through the first fluid passage 120, the axial position of the inlet valve 84 is held at a constant axial position. If the flow through the first metering passage 160 is greater than the flow through the first fluid passage 120, the inlet valve 84 moves in a second axial direction toward the first valve seat 110 causing the clearance between the first tapered surface and the first valve seat 110 to decrease. As this clearance decreases, the amount of fluid communicated between the inlet passage 90 and the first service passage 94 decreases.

The amount of flow through the first metering passage 160 is governed primarily by the size of an opening created between the first metering slot 158 and a first recess 196 in the second axial end 108a of the first valve bore 98. As the opening between the first metering slot 158 and the first recess 196 increases, the amount of flow through the first metering passage 160 increases.

Referring now to FIG. 1, 4 and 6, the middle stage valve assembly 44 is shown in the second position P_{M2} (shown in FIG. 6). In the second position P_{M2}, the second land 192 of the middle stage spool valve 70 at least partially uncovers a second opening 198 to the first portion 131a of the second fluid passage 130 at the bore 73. With the second opening 198 to the first portion 131a of the second fluid passage 130 at least partially uncovered, the second position P_{M2} is adapted to provide fluid communication between the second load holding portion 128 of the second valve bore 100 and the second fluid passage 130.

With the middle stage spool valve 70 in the second position P_{M2}, the first land 190 blocks the first opening 194 to the first portion 122a of the first fluid passage 120. With the pathway from the first load holding portion 118 of the first valve bore 98 to the first service portion 116 of the first valve bore 98 blocked, the input valve 84 is hydraulically locked in the seated position.

Pressurized fluid from the first port 32 of the fluid actuator 16 flows through the first service passage 94 of the valve housing 88. The pressurized fluid acts on the first end portion 164 of the second poppet valve 162 of the return valve 86. In the depicted embodiment, pressurized fluid acts on a portion of the second tapered surface 172 of the first end portion 164 of the second poppet valve 162. The fluid acting on the portion of the second tapered surface 172 of the second poppet valve 162 forces the second poppet valve 162 away from the second valve seat 112 to an unseated position when the middle stage spool valve 70 is in the second position P_{M2}. As the second poppet valve 162 moves in the second valve bore 100 in an axial direction away from the second valve seat 112, fluid in the second load holding portion 128 of the second valve bore 100 is communicated to the first portion 131a of the second fluid passage 130 through the bore 73 of the middle stage valve assembly 44. The fluid in the second fluid passage 130 flows through the one-way valve 132 and to return passage 92.

With the second poppet valve 162 in the unseated position, a clearance 200 is defined between the second tapered surface 172 of the second poppet valve 162 and the second valve seat 112. Fluid from the fluid actuator 16 flows from the first service passage 94 through the clearance 200 and to the return passage 92. As this clearance 200 increases, the amount of fluid communicated between the first service passage 94 and the return passage 92 increases. If the flow through the second metering passage 176 is equal to the flow through the second fluid passage 130, the axial position of the return valve 86 is held at a constant axial position. If the flow through the second metering passage 176 is greater than the flow through the second fluid passage 130, the return valve 86 moves in an axial direction toward the second valve seat 112 causing the clearance 200 between the second tapered surface 172 of the second poppet valve 162 and the second valve seat 112 to decrease. As this clearance 200 decreases, the amount of fluid communicated between the first service passage 94 and the return passage 92 decreases.

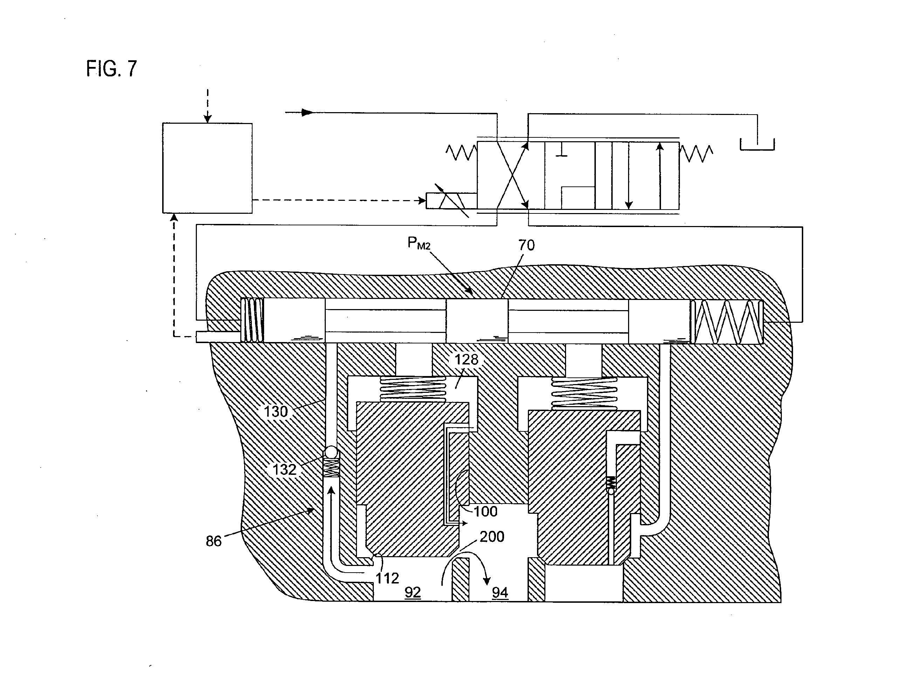

Referring now to FIG. 1, 4 and 7, the anti-cavitation feature of the return valve 86 will be described. As previously provided, cavitation in the fluid system 10 occurs when the fluid actuator 16 requires more fluid than is being provided by the fluid pump 14. In this situation, the pressure of the fluid in the return passage 92 is greater than the pressure of the fluid in the first service passage 94.

With the middle stage spool valve 70 in the second position P_{M2}, fluid from the return passage 92 acts against the first end face 168 of the second poppet valve 162. The fluid acting on the first end face 168 forces the second poppet valve 162 away from the second valve seat 112 to the unseated position. As the pressure of the fluid in the return passage 92 is greater than the pressure of the fluid in the first service passage 94, the fluid in the second load holding portion 128 of the second valve bore 100 is displaced through the second metering passage 176 of the second poppet valve 62 to the first service passage 94 as the second poppet valve 162 is moved in the axial direction away from the second valve seat 112. This displacement of fluid from the second load holding portion 128 of the second valve bore 100 to the first service passage 94 allows the second poppet valve 162 to move to the unseated position. With the second poppet valve 162 in the unseated position, fluid from the return passage 92 is communicated to the first service passage 94 through the clearance 200 formed between the second tapered surface 172 of the second poppet valve 162 and the second valve seat 112.

The one-way valve 132 prevents fluid from the return passage 92 from flowing through the second fluid passage 130 to the second load holding portion 128 of the second valve bore 100 when the pressure of the fluid in the return passage 92 is greater than the pressure of the fluid in the first service passage 94. By blocking fluid communication through the second fluid passage 130, the one-way valve 132 prevent fluid from the return passage 92 from being communicated to the second load holding portion 128 of the second valve bore 100 and hydraulically locking the return valve 86 in the seated position.

Referring now to FIG. 1, while the operation of the first valve assembly 40a for providing fluid from the inlet passage 90 to the first service passage 94, from the first service passage 94 to the return passage 92, and from the return passage 92 to the first service passage 94 has been described, it will be understood that the second valve assembly 40b operates in a similar manner for providing fluid from the inlet passage 90 to the second service passage 96, from the second service passage 96 to the return passage 92 and from the return passage 92 to the second service passage 96 as the structural components of the second valve assembly 40b is substantially similar to the first valve assembly 40a.

## Claims

1. A valve assembly (40) comprising:
a valve housing (88) defining:
a first service passage (94);
a first valve bore (98) in fluid communication with the first service passage (94), the first valve bore (98) having an inlet portion (114) in fluid communication with an inlet passage (90) of the valve housing (88), a first service portion (116) in fluid communication with the first service passage (94), and a first load holding portion (118), the first valve bore (98) having a first valve seat (110) that is disposed between the inlet portion (114) and the first service portion (116);
a first fluid passage (120) in selective fluid communication with the first load holding portion (118) of the first valve bore (98) and the first service passage (94);
a second valve bore (100) in fluid communication with the first service passage (94), the second valve bore (100) having a return portion (124) in fluid communication with a return passage (92) of the valve housing (88), a second service portion (126) in fluid communication with the first service passage (94), and a second load holding portion (128), the second valve bore (100) having a second valve seat (112) that is disposed between the return passage (92) and the first service passage (94);
a second fluid passage (130) in selective communication with the second load holding portion (128) of the second valve bore (100) and the return passage (92);
an inlet valve (84) disposed in the first valve bore (98), the inlet valve (84) being moveable between a seated position and an unseated position; and
a return valve (86) disposed in the second valve bore (100), the return valve (86) being moveable between a seated position and an unseated position;
**characterized by**:
a one-way valve (132) disposed in the second fluid passage (130), wherein the one-way valve (132) allows fluid to flow only in a direction from the second load holding portion (128) to the return passage (92).

2. The valve assembly of claim 1, wherein the inlet valve (84) includes a body (138) defining a first metering passage (160) through the body (138), the first metering passage (160) being in fluid communication with the inlet passage (90) and the first load holding portion (118) of the first valve bore (98).

3. The valve assembly of claim 2, wherein a check valve (136) is disposed in the first metering passage (160), the check valve (136) providing fluid flow only in a direction from the inlet passage (90) to the first load holding portion (118).

4. The valve assembly of claim 2, wherein return valve (86) defines a second metering passage (176) providing fluid communication between the second load holding portion (128) and the second service portion (126) of the second valve bore (100).

5. The valve assembly of claim 1, wherein:
the inlet valve (84) includes a body (138) defining a first metering passage (160) through the body (138), the first metering passage (160) being in fluid communication with the inlet passage (90) and the first load holding portion (118) of the first valve bore (98), the inlet valve (84) further including a check valve (136) disposed in the first metering passage (160), the check valve (136) providing fluid flow only in a direction from the inlet passage (90) to the first load holding portion (118); and
the return valve (86) defines a second metering passage (176) that provides fluid communication between the second load holding portion (128) and the second service portion (126) of the second valve bore (100).

6. The valve assembly of claim 4 or 5, wherein the inlet valve (84) includes a circumferential surface (154) defining a first metering slot (158), the first metering slot (158) being in fluid communication with the first metering passage (160).

7. The valve assembly of claim 6, wherein the return valve (86) includes a circumferential surface (180) defining a second metering slot (184), the second metering slot (184) being in fluid communication with the second metering passage (176).

8. The valve assembly of claim 1 or 5, wherein the first valve seat (110) is frusto-conical in shape.

9. The valve assembly of claim 1 or 5, wherein the one-way valve (132) is a check ball.

10. The valve assembly of claim 9, further comprising a middle stage valve assembly (44) in fluide communication with the inlet valve (84) and the return valve (86), the middle stage valve assembly (44) being adapted to provide fluid communication between the first load holding portion (118) of the first valve bore (98) and the first fluid passage (94) and between the second load holding portion (128) of the second valve bore (100) and the second fluid passage (130).

11. A valve assembly comprising:
a pilot stage valve assembly (42);
a middle stage valve assembly (44) in fluid communication with the pilot stage valve assembly (42);
a main stage valve assembly (46) in fluid communication with the middle stage valve assembly (44), the main stage valve assembly (46) including a valve assembly as it is defined in claim 1.

12. The valve assembly of claim 11, wherein the pilot stage valve assembly (42) includes an electronic actuator (62).

13. The valve assembly of claim 12, wherein the electronic actuator (62) is a voice coil.

14. The valve assembly of claim 11, wherein pilot stage valve assembly (42) provides fluid to at least one end of a middle stage spool valve (70) of the middle stage valve assembly (44) to actuate the middle stage valve assembly (44).

15. The valve assembly of claim 10 or 11, wherein the middle stage valve assembly (44) is a four-way, three-position proportional valve.

## Patentansprüche

1. Ventilanordnung (40) versehen mit:
einem Ventilgehäuse (88), welches festlegt:
einen ersten Betriebsdurchlass (94);
eine erste Ventilbohrung (98) in Fluidverbindung mit dem ersten Betriebsdurchlass (94), wobei die erste Ventilbohrung (98) einen Einlassbereich (114) in Fluidverbindung mit einem Einlassdurchlass (90) des Ventilgehäuses (88), einen ersten Betriebsbereich (116) in Fluidverbindung mit dem ersten Betriebsdurchlass (94), und einen ersten Lasthaltebereich (118) aufweist, wobei die erste Ventilbohrung (98) einen ersten Ventilsitz (110) aufweist, der zwischen dem Einlassbereich (114) und dem ersten Betriebsbereich (116) angeordnet ist;
einen ersten Fluiddurchlass (120) in selektiver Fluidverbindung mit dem ersten Lasthaltebereich (118) der ersten Ventilbohrung (98) und dem ersten Betriebsdurchlass (94);
eine zweite Ventilbohrung (100) in Fluidverbindung mit dem ersten Betriebsdurchlass (94), wobei die zweite Ventilbohrung (100) einen Rückführbereich (124) in Fluidverbindung mit einem Rückführdurchlass (92) des Ventilgehäuses (88), einen zweiten Betriebsbereich (126) in Fluidverbindung mit dem ersten Betriebsdurchlass (94), und einen zweiten Lasthaltebereich (128) aufweist, wobei die zweite Ventilbohrung (100) einen zweiten Ventilsitz (112) hat, der zwischen dem Rückführdurchlass (92) und dem ersten Betriebsdurchlass (94) angeordnet ist;
einen zweiten Fluiddurchlass (130) in selektiver Verbindung mit dem zweiten Lasthaltebereich (128) der zweiten Ventilbohrung (100) und dem Rüclcführdurchlass (92);
einem Einlassvontil (84), welches in der ersten Ventilbohrung (98) angeordnet ist, wobei das Einlassventil (84) zwischen einer geschlossenen Position und einer geöffneten Position bewegbar ist, und
einem Rückführventil (86), welches in der zweiten Ventilbohrung (100) angeordnet ist, wobei das Rückführventil (86) zwischen einer geschlossenen Position und einer geöffneten Position bewegbar ist;
**gekennzeichnet durch**:
ein Einwegeventil (132), welches in dem zweiten Fluiddurchlass (130) angeordnet ist, wobei das Einwegeventil (132) einen Fluiddurchfluss in nur einer Richtung von dem zweiten Lasthaltebereich (128) zu dem Rückführdurchlass (92) zulässt.

2. Ventilanordnung gemäß Anspruch 1, bei weicher das Einlassventil (84) einen Körper (138) umfasst, der einen ersten Dosierdurchlass (160) durch den Körper (138) bestimmt, wobei der erste Dosierdurchlass (160) in Fluidverbindung mit dem Einlassdurchlass (90) und dem ersten Lasthaltebereich (118) der ersten Ventilbohrung (98) steht.

3. Ventilanordnung gemäß Anspruch 2, bei welcher ein Rückschlagventil (136) in dem ersten Dosierdurchlass (160) angeordnet ist, wobei das Rückschlagventil (136) für einen Fluidfluss in nur einer Richtung von dem Einlassdurchlass (90) zu dem ersten Lasthaltebereich (118) sorgt.

4. Ventilanordnung gemäß Anspruch 2, bei welcher das Rückführventil (86) einen zweiten Dosierdurchlass (176) bestimmt, der für eine Fluidverbindung zwischen dem zweiten Lasthaltebereich (128) und dem zweiten Betriebsbereich (126) der zweiten Ventilbohrung (100) sorgt.

5. Ventilanordnung gemäß Anspruch 1, bei welcher:
das Einlassventil (84) einen Körper (138) aufweist, der einen ersten Dosierdurchlass (160) durch den Körper (138) bestimmt, wobei der erste Dosierdurchlass (160) in Fluidverbindung mit dem Einlassdurchlass (90) und dem ersten Lasthaltebereich (118) der ersten Ventilbohrung (98) steht, wobei das Einlassventil (84) ferner ein Rückschlagventil (136) aufweist, welches in dem ersten Dosierdurchlass (160) angeordnet ist, wobei das Rückschlagventil (136) für einen Fluidfluss in nur einer Richtung von dem Einlassdurchlass (90) zu dem ersten Lasthaltebereich (118) sorgt; und
wobei das Rückführventil (86) einen zweiten Dosierdurchlass (176) bestimmt, der für eine Fluidverbindung zwischen dem zweiten Lasthaltebereich (128) und dem zweiten Betriebsbereich (126) der zweiten Ventilbohrung (100) sorgt.

6. Ventilanordnung gemäß Anspruch 4 oder 5, bei welcher das Einlassventil (84) eine Umfangsfläche (154) aufweist, die einen ersten Dosierschlitz (158) bestimmt, wobei der erste Dosierschlitz (158) in Fluidverbindung mit dem ersten Dosierdurchlass (160) steht.

7. Ventilanordnung gemäß Anspruch 6, bei welcher das Rückführventil (86) eine Umfangsfläche (180) umfasst, die einen zweiten Dosierschlitz (184) bestimmt, wobei der zweite Dosierschlitz (184) in Fluidverbindung mit dem zweiten Dosierdurchlass (176) steht.

8. Ventilanordnung gemäß Anspruch 1 oder 5, bei welcher der erste Ventilsitz (110) eine Kegelstumpfform aufweist.

9. Ventilanordnung gemäß Anspruch 1 oder 5, bei welcher das Einwegeventil (132) eine Rückschlagskugel ist.

10. Ventilanordnung gemäß Anspruch 9, ferner versehen mit einer Mittelstufen-Ventilanordnung (44) in Fluidverbindung mit dem Einlassventil (84) und dem Rückführventil (86), wobei die Mittelstufen-Ventilanordnung (44) ausgelegt ist, eine Fluidverbindung zwischen dem ersten Lasthaltebereich (118) der ersten Ventilbohrung (98) und dem ersten Fluiddurchlass (94) sowie zwischen dem zweiten Lasthaltebereich (128) der zweiten Ventilbohrung (100) und dem zweiten Fluiddurchlass (130) bereitzustellen.

11. Ventilanordnung versehen mit:
einer Servostufen-Ventifanordnung (42);
einer Mittelstufen-Ventilanordnung (44) in Fluidverbindung mit der Servostufen-Ventilanordnung (42);
einer Hauptstufen-Ventilanordnung (46) in Fluidverbindung mit der Mittelstufen-Ventilanordnung (44), wobei die Hauptstufen-Ventilanordnung (46) eine Ventilanordnung gemäß Anspruch 1 beinhaltet.

12. Ventilanordnung gemäß Anspruch 11, bei welcher die Servostufen-Ventilanordnung (42) einen elektronischen Aktuator (62) umfasst.

13. Ventilanordnung gemäß Anspruch 12, bei welcher der elektronische Aktuator (62) eine Schwingspule ist.

14. Ventilanordnung gemäß Anspruch 11, bei welcher die Servostufen-Ventilanordnung (42) Fluid zu mindestens einem Ende eines Mittelstufen-Spulenventils (70) der Mittelstufen-Ventilanordnung (44) liefert, um die Mittelstufen-Ventilanordnung (44) zu betätigen.

15. Ventilanordnung gemäß Anspruch 10 oder 11, bei welcher die Mittelstufen-Ventilanordnung (44) ein Vierwege-Dreipositions-Proportionalventil ist.

## Revendications

1. Ensemble soupape (40) comprenant :
un boîtier de soupape (88) définissant :
un premier passage de service (94) ;
un premier alésage de soupape (98) en communication fluidique avec le premier passage de service (94), le premier alésage de soupape (98) ayant une partie d'admission (114) en communication fluidique avec un passage d'admission (90) du boîtier de soupape (88), une première partie de service (116) en communication fluidique avec le premier passage de service (94), et une première partie de maintien de charge (118), le premier alésage de soupape (98) ayant un premier siège de soupape (110) qui est disposé entre la partie d'admission (114) et la première partie de service (116) ;
un premier passage de fluide (120) en communication fluidique sélective avec la première partie de maintien de charge (118) du premier alésage de soupape (98) et du premier passage de service (94) ;
un deuxième alésage de soupape (100) en communication fluidique avec le premier passage de service (94), le deuxième alésage de soupape (100) ayant une partie de retour (124) en communication fluidique avec un passage de retour (92) du boîtier de soupape (88), une deuxième partie de service (126) en communication fluidique avec le premier passage de service (94), et une deuxième partie de maintien de charge (128), le deuxième alésage de soupape (100) ayant un deuxième siège de soupape (112) qui est disposé entre le passage de retour (92) et le premier passage de service (94) ;
un deuxième passage de fluide (130) en communication sélective avec la deuxième partie de maintien de charge (128) du deuxième alésage de soupape (100) et le passage de retour (92) ;
une soupape d'admission (84) disposée dans le premier alésage de soupape (98), la soupape d'admission (84) étant mobile entre une position fermée et une position ouverte ; et
une soupape de retour (86) disposée dans le deuxième alésage de soupape (100), la soupape de retour (86) étant mobile entre une position fermée et une position ouverte ;
**caractérisé par** :
une soupape de retenue (132) disposée dans le deuxième passage de fluide (130), dans lequel la soupape de retenue (132) permet au fluide de s'écouler seulement dans une direction depuis la deuxième partie de maintien de charge (128) vers le passage de retour (92).

2. Ensemble soupape de la revendication 1, dans lequel la soupape d'admission (84) comporte un corps (138) définissant un premier passage de mesure (160) à travers le corps (138), le premier passage de mesure (160) étant en communication fluidique avec le passage d'admission (90) et la première partie de maintien de charge (118) du premier alésage de soupape (98).

3. Ensemble soupape de la revendication 2, dans lequel une soupape de non-retour (136) est disposée dans le premier passage de mesure (160), la soupape de non-retour (136) assurant un écoulement de fluide seulement dans une direction depuis le passage d'admission (90) vers la première partie de maintien de charge (118).

4. Ensemble soupape de la revendication 2, dans lequel une soupape de retour (86) définit un deuxième passage de mesure (176) assurant une communication fluidique entre la deuxième partie de maintien de charge (128) et la deuxième partie de service (126) du deuxième alésage de soupape (100).

5. Ensemble soupape de la revendication 1, dans lequel :
la soupape d'admission (84) comporte un corps (138) définissant un premier passage de mesure (160) à travers le corps (138), le premier passage de mesure (160) étant en communication fluidique avec le passage d'admission (90) et la première partie de maintien de charge (118) du premier alésage de soupape (98), la soupape d'admission (84) comportant en outre une soupape de non-retour (136) disposée dans le premier passage de mesure (160), la soupape de non-retour (136) assurant un écoulement de fluide seulement dans une direction depuis le passage d'admission (90) vers la première partie de maintien de charge (118) ; et
la soupape de retour (86) définit un deuxième passage de mesure (176) qui assure une communication fluidique entre la deuxième partie de maintien de charge (128) et la deuxième partie de service (126) du deuxième alésage de soupape (100).

6. Ensemble soupape de la revendication 4 ou 5, dans lequel la soupape d'admission (84) comporte une surface circonférentielle (154) définissant une première fente de mesure (158), la première fente de mesure (158) étant en communication fluidique avec le premier passage de mesure (160).

7. Ensemble soupape de la revendication 6, dans lequel la soupape de retour (86) comporte une surface circonférentielle (180) définissant une deuxième fente de mesure (184), la deuxième fente de mesure (184) étant en communication fluidique avec le deuxième passage de mesure (176).

8. Ensemble soupape de la revendication 1 ou 5, dans lequel le premier siège de soupape (110) a une forme tronconique.

9. Ensemble soupape selon la revendication 1 ou 5, dans lequel la soupape de retenue (132) est une bille de non-retour.

10. Ensemble soupape de la revendication 9, comprenant en outre un ensemble soupape d'étage intermédiaire (44) en communication fluidique avec la soupape d'admission (84) et la soupape de retour (86), l'ensemble soupape d'étage intermédiaire (44) étant adapté pour assurer une communication fluidique entre la première partie de maintien de charge (118) du premier alésage de soupape (98) et le premier passage de fluide (94) et entre la deuxième partie de maintien de charge (128) du deuxième alésage de soupape (100) et le deuxième passage de fluide (130).

11. Ensemble soupape comprenant :
un ensemble soupape d'étage pilote (42) ;
un ensemble soupape d'étage intermédiaire (44) en communication fluidique avec l'ensemble soupape d'étage pilote (42) ;
un ensemble soupape d'étage principal (46) en communication fluidique avec l'ensemble soupape d'étage intermédiaire (44), l'ensemble soupape d'étage principal (46) comportant un ensemble soupape tel qu'il est défini dans la revendication 1.

12. Ensemble soupape de la revendication 11, dans lequel l'ensemble soupape d'étage pilote (42) comporte un actionneur électronique (62).

13. Ensemble soupape de la revendication 12, dans lequel l'actionneur électronique (62) est une bobine acoustique.

14. Ensemble soupape de la revendication 11, dans lequel l'ensemble soupape d'étage pilote (42) fournit du fluide à au moins une extrémité d'un clapet à boisseau d'étage intermédiaire (70) de l'ensemble soupape d'étage intermédiaire (44) pour actionner l'ensemble soupape d'étage intermédiaire (44).

15. Ensemble soupape de la revendication 10 ou 11, dans lequel l'ensemble soupape d'étage intermédiaire (44) est une soupape proportionnelle à trois positions et à quatre voies.
